# EUROPEAN PATENT SPECIFICATION

(11) **EP 2 014 543 B1**
(45) Date of publication and mention of the grant of the patent: **01.09.2010**
(21) Application number: 08159714.8
(22) Date of filing: 04.07.2008
(51) Int. Cl.: B62H 5/00, E05B 71/00

(54) **Bicycle and lock cable**
Fahrrad und Kabelverschluss
Bicyclette et câble antivol

(30) Priority: 05.07.2007 NL 1034101
(43) Date of publication of application: 14.01.2009
(73) Proprietor: Batavus B.V., 8444 AR Heerenveen (NL)
(72) Inventor: Zandstra, Jurjen, 8412 SN, Hoornsterzwaag (NL)
(74) Representative: Hatzmann, Martin

(56) References cited:
- EP-A- 0 774 404
- DE-A1-102004 009 607
- GB-A- 2 256 837
- US-A- 4 064 714

## Description

The invention relates to a bicycle.

Furthermore the invention has connection with a lock cable for a bicycle, the lock cable comprising a first end and a second end, a plug on a first lock cable portion at the first end and a plug sleeve, cooperating with the plug, on a second lock cable portion at the second end for forming, by locking the plug, a closed loop-shaped condition of the lock cable in which condition the first lock cable portion and the second lock cable portion are mutually secured.

Such a lock cable is known from practice. The known lock cable is simple and inexpensive and this is one of the reasons many cyclist have such a lock cable. In practice, for securing a bicycle against theft, the known lock cable may be utilized as follows. A user brings the lock cable in its closed, loop-shaped condition such that then, not only a part of the bicycle such as, for instance, a tube of the bicycle frame, but also an external object such as, for instance, a lamppost, is enclosed by the cable. The bicycle is then tied to the external object by means of the lock cable, so that the bicycle cannot be carried off. With another known manner for securing a bicycle against theft, a user brings the lock cable in its closed, loop-shaped condition such that then, for instance a tube of the bicycle frame and a wheel of the bicycle are at least partly enclosed by the cable such that the wheel is blocked and riding with the bicycle cannot take place.

A drawback of a bicycle and of this known lock cable is that the lock cable cannot be used without modifications for yet another known manner for securing a bicycle against theft. With this last known method of securing, the plug of a lock cable is secured to the bicycle, for instance in a plug sleeve of a ring lock attached to the bicycle. With this last method of securing, in practice, a different type of lock cable is utilized. The other type of lock cable, as well as the initially indicated known lock cable, has a plug at one end, however, at its other end, it has an eye. When securing the bicycle, the plug end of this lock cable is pulled through the eye at the other end of the lock cable such that an external object such as, for instance, a lamppost is enclosed by the cable of the lock cable. Then, by means of the plug, the lock cable is secured to the bicycle, for instance in a plug sleeve of a ring lock attached to the bicycle. Thus, by means of the lock cable provided with an eye the bicycle can be attached to an external object.

An additional drawback of a bicycle and of the initially indicated known lock cable is that, as a rule, in a condition when it does not tie the bicycle to an object or when it does not block a wheel of the bicycle, the lock cable cannot be stored away on or with the bicycle in a practical manner. In practice, during cycling, such a lock cable is taken along in, for instance, a (bicycle) saddlebag or suspended separately from the bicycle handlebar. Lock cables stored in such a manner often take up space in an undesired manner, are lost or lead to dangerous situations during cycling.

It is noted that from DE 102004009607A1, a bicycle according to the preamble of claim 1 is known. From EP0774404A too, a bicycle according to the preamble of claim 1 is known, more specifically a motorized bicycle.

It is an object of the invention to provide a simple solution to the storage problem of a lock cable of the initially indicated type intended for a bicycle, which solution also enhances the possibilities of securing the bicycle against theft with the aid of this lock cable.

To this end, according to the invention, a bicycle according to claim 1 is provided.

Attaching the frame pin to the frame is a feature that can be carried out in a simple and inexpensive manner. The frame pin can simply be anchored to the frame through, for instance, welding or screwing.

A lock cable of the initially indicated type can be stored on the bicycle by attaching the plug sleeve of the lock cable and optionally securing it to the frame pin of the bicycle. Further, in the last mentioned condition where the plug sleeve and frame pin are locked together, it is also possible to secure the plug of the lock cable to the bicycle, for instance in a plug sleeve of a ring lock attached to the bicycle. In such a situation, the lock cable is therefore locked by each of its ends to the bicycle. When, in this situation, an external object such as, for instance, a lamppost is enclosed by the bicycle and the lock cable, the bicycle is tied to the external object.

A favourable storage condition of the lock cable is promoted by the holder, attached to the frame, for receiving a plug of the lock cable which cooperates with the holder.

The lock cable of the initially indicated type may also be provided with a frame pin sleeve to be attached to the frame pin of the bicycle for attaching the lock cable to the frame of the bicycle. In this case therefore, the lock cable comprises, on the one side, the plug sleeve cooperating with the plug of the lock cable and, on the other side, the frame pin sleeve cooperating with the frame pin of the bicycle. This offers the additional advantage that it is possible, with the frame pin sleeve and frame pin in attached condition, to secure the plug of the lock cable in the plug sleeve of the lock cable itself instead of, for instance, in a plug sleeve of a ring lock attached to the bicycle. Thus, through the use of this lock cable, the possibilities of securing the bicycle against theft with the lock cable are increased, even without the bicycle having to be provided with a plug sleeve.

It is remarked that the lastmentioned lock cable may also be designed for locking the frame pin in the frame pin sleeve, and may comprise operating means for joint operation of, on the one side, locking the plug in the plug sleeve and on the other side, locking the frame pin in the frame pin sleeve.

In the following, the invention is further elucidated with reference to the schematic Figures in the appended drawing.
Fig. 1 shows, in side view, an example of an embodiment of a frame of a bicycle according to the invention;
Fig. 2 shows an example of a lock cable according to the state of the art;
Fig. 3 shows the bicycle frame of Fig. 1 with suspended therefrom the lock cable of Fig. 2 in a storage condition;
Fig. 4 shows the lock cable of Fig. 2 suspended in a condition secured against theft;
Fig. 5 shows an example of an embodiment of a lock cable in a condition secured against theft suspended from a bicycle frame of Fig. 1.

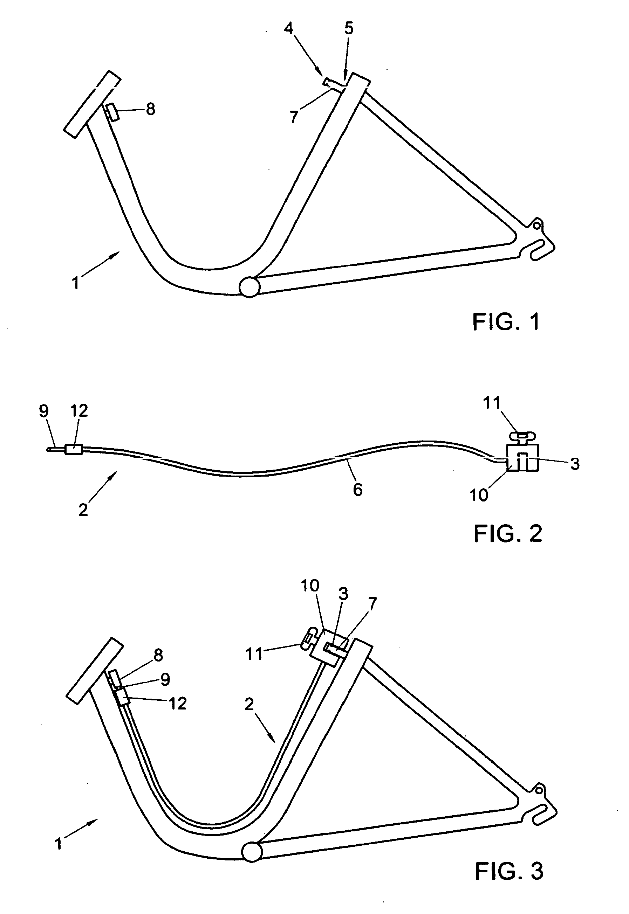

A bicycle according to the invention comprises a frame, and a frame pin attached to the frame. In addition to parts customarily understood to fall within the term "bicycle frame", the frame can also comprise part of frames of bicycle parts such as bicycle saddle, bicycle handlebar and the like. In the example shown in Figs. 1, 3, 4 and 5, the frame of the bicycle is a bicycle frame indicated with reference numeral 1 and the frame pin attached to the bicycle frame 1 is indicated with reference numeral 7. However, the frame pin 7 can also be attached to frames of bicycle parts such as, for instance, bicycle saddle, bicycle handlebar and the like. The frame pin 7 can for instance also be attached to a saddle pin or steering pin.

The frame pin 7 has a free end 4 projecting relative to the frame and, located opposite the free end 4, a frame attaching end 5, which frame attaching end 5 is secured to the frame 1 in an undetachable and at least partly immovable manner relative to the frame 1. The frame pin 7 may be anchored by its frame attaching end 5 to the frame through welding or screwing.

In the example, the frame pin 7 is situated adjacent the location in the bicycle frame 1 which is intended for the saddle of the bicycle. Such a position adjacent the bicycle saddle offers ease of use because this position is generally within reach of users, close to a wheel to be blocked by the lock cable and usually also close to the position of a ring lock.

Optionally, the frame pin 7 can also be adjustably secured to the frame 1, for instance in the sense that the frame attaching end 5 is slidable (but still undetachable) in longitudinal direction of a tube of the frame 1.

In the Figures 2, 3 and 4, a cable lock 2 is shown that, taken by itself, is known from the state of the art.

The cable lock 2 shown (see for instance Fig. 2) comprises a first end and a second end, a plug 9 on a first lock cable portion at the first end and a plug sleeve 3 cooperating with the plug on a second lock cable portion at the second end. The length of the cable lock 2 is substantially determined in that the cable lock 2 comprises a cable 6. It is noted that in the framework of the invention, the cable 6 can also be or comprise a chain. In the example, the plug 9 is connected to the cable 6 by means of a connecting element 12 and the plug sleeve 3 is situated in a locking element 10 connected to the cable 6. By securing the plug 9 in the plug sleeve 3, a closed, loop-shaped condition of the lock cable 2 is formed, in which condition the first lock cable portion and the second lock cable portion are mutually secured. The manner of securing can be realized in one of the customary manners, for instance with the aid of a key, such as the key 11 shown, or, for instance, with the aid of a combination lock.

In the example of the Figures 2, 3 and 4, the plug sleeve 3 of the lock cable 2 and the frame pin 7 attached to the frame 1 are designed for mutual cooperation. This means that the plug sleeve 3 of the lock cable 2 has a double function in that therein not only the plug 9 can be attached but also the frame pin 7. In this latter case, the lock cable 2 is attached to the frame, see Fig. 3. This situation offers a suitable storage condition of the lock cable to the bicycle. Optionally, the attached condition between plug sleeve 3 and frame pin 7 can also be lockable, for instance by means of the locking element 10 of the lock cable 2, for instance with the aid of the key 11. In this manner, the lock cable cannot be lost or stolen in its storage condition.

The bicycle further comprises, attached to the frame 1 and cooperating with the plug 9 of the lock cable 2, a holder 8 for receiving the plug 9. Such a holder 8 is shown in Figs. 1 and 3. The holder 8 may be designed for holding the plug with some clamping force. In this case, the holder 8 can optionally also be designed such that the plug 9 can be taken therefrom by a user by applying some tensile force to overcome the clamping force and/or by operating an operating element of the holder 8 that (partly) removes the clamping force of the holder 8. Optionally, the holder can also be designed as a sleeve provided in the frame 1 and cooperating with the plug 9. As can be understood on the basis of Fig. 3, the holder can promote a favourable storage condition of the lock cable. Optionally, the bicycle can comprise further supporting means for supporting the lock cable in the storage condition, for instance a cable guiding element provided on the frame 1, a cable clamp or the like for supporting the cable 6.

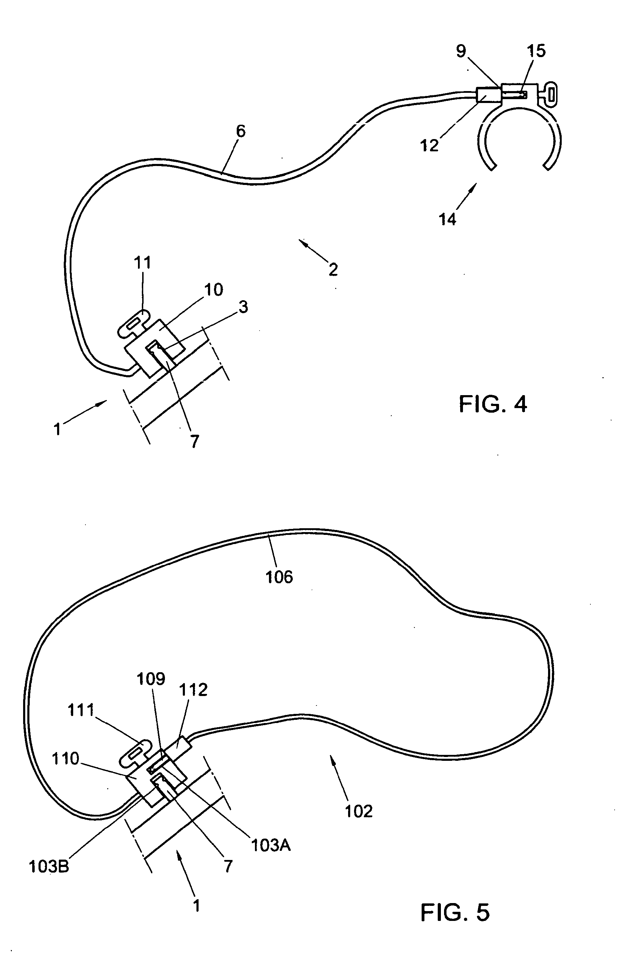

Reference is made now to Fig. 4, wherein the lock cable 2 of Fig. 2 is shown in a condition secured against theft suspended from the bicycle frame 1.

Fig. 4 also shows a ring lock 14 which is, although this is not shown, attached to the frame 1. This attachment of the ring lock 14 to the frame can be one of the customary attachments, for instance an attachment such that the annular segment-shaped locking bolt of the ring lock can be introduced between the spokes of a bicycle wheel for blocking this bicycle wheel. The ring lock shown is of the known type which is additionally equipped with a sleeve 15 for locking therein a plug of a lock cable, such as the plug 9 of the known lock cable 2 shown in Fig. 2. In the situation shown in Fig. 4, as is the case in the situation shown in Fig .3, the lock cable 2 is attached by its plug sleeve 3 to the frame pin 7 attached to the frame. Further, in the situation shown, the plug 9 of the lock cable 2 is attached in the sleeve 15 of the ring lock attached to the frame. When, in the situation shown, the frame pin 7 is locked in the plug sleeve 3, and the plug 9 is locked in the sleeve 15, while an external object such as, for instance, a lamppost is enclosed by the bicycle and the lock cable, then, the bicycle is tied to the external objects. However, instead of enclosing an external object, the cable 6 of the lock cable 2 can also be guided between the spokes of a wheel of the bicycle such, that the wheel is blocked and riding the bicycle is not possible.

Reference is now made to Fig. 5, wherein a cable lock 102 is shown. The cable lock 102 comprises a first end and a second end, a plug 109 at a first lock cable portion at the first end and a plug sleeve 103A cooperating with the plug at a second lock cable portion at the second end. The length of the cable lock 102 is substantially determined in that the cable lock 102 comprises a cable 106. It is noted that in the framework of the invention, the cable 106 can also be or comprise a chain. In the example, the plug 109 is connected by means of a connecting element 112 to the cable 106 and the plug sleeve 103A is situated in a locking element 110 connected to the cable 106. By locking the plug 109 in the plug sleeve 103A, a closed, loop-shaped condition of the cable lock 102 is formed, in which condition the first lock cable portion and the second lock cable portion are mutually secured. The manner of locking can be realized in one of the customary manners, for instance with the aid of a key, such as the key 111 shown, or, for instance, with the aid of a combination lock.

The cable lock 102 described thus far is similar to the cable lock 2 shown in Figs. 2, 3 and 4. The cable lock 102 too, in combination with the bicycle described, can therefore be brought into the storage condition described with reference to Fig. 3, and into the conditions secured against theft described with reference to Fig. 4.

What is, however, different compared to the cable lock 2 is that the cable lock 102 is also provided with a frame pin sleeve 103B to be attached to the frame pin 7 of the bicycle, for attaching the lock cable 102 to the frame 1 of the bicycle. In the example shown, the frame pin sleeve 103, like the plug sleeve 103A is situated in the locking element 110. The lock cable 102 is preferably designed for locking the frame pin 7 in the frame pin sleeve 103B. Therefore, the lock cable 102 comprises, on the one side, the plug sleeve 103A cooperating with the plug 109 of the lock cable 102, and, on the other side, the frame pin sleeve 103B cooperating with the frame pin 7 of the bicycle. This offers the additional advantage that it is possible, with the frame pin sleeve 103B and frame pin 107 in attached condition, to lock the plug 109 of the lock cable 102 in the plug sleeve 103A of the lock cable 102 itself instead of in, for instance, a plug sleeve of (a ring lock of) the bicycle. Then, the bicycle needs not be provided with a plug sleeve. It is clear that in the situation shown in Fig. 5, an external object can be enclosed by the lock cable 102 or that the cable 106 of the lock cable can be guided between the spokes of a wheel of the bicycle. Thus, through the use of this lock cable 102 according to the invention, the possibilities of securing the bicycle with the lock cable against theft are increased, even without the bicycle having to be provided with a plug sleeve.

Preferably, the lock cable 102 comprises operating means, such as the key 111 or a combination lock, for joint operation of, on the one side, locking the plug 109 in the plug sleeve 103A and, on the other side, locking the frame pin in the frame pin sleeve.

Optionally, the lock cable 102 can be designed such that the plug sleeve 103A and the frame pin sleeve 103B have the same or a similar shape, so that the plug 109 also cooperates with the frame pin sleeve 103B and the frame pin 7 also cooperates with the plug sleeve 103A. In that case, users can, at wish, attach and lock the plug 109 or the frame pin7 in the plug sleeve 103A or in the frame pin sleeve 103B.

It is noted that the above-mentioned advantages of embodiments do not delimited the invention and that within the framework of the accompanying claims, various alternatives are possible. For instance, the frame pin and/or the holder can be attached to the frame at various locations. Also, the plug sleeve and the frame pin sleeve can be situated at different locations of the cable lock. Such and similar alternatives are understood to fall within the framework of the invention as defined in the accompanying claims.

## Claims

1. A bicycle, comprising a frame (1), which frame, in addition to the parts covered by the customary term "bicycle frame", can also comprise parts of frames of bicycle parts such as bicycle saddle, bicycle handlebar and the like, **characterized by** a frame pin (7) attached to the frame, to be attached in a frame pin sleeve (3; 103B) of a lock cable (1; 102) cooperating with the frame pin, for attaching the lock cable to the frame, wherein the frame pin has a free lock cable attaching end (4) projecting relative to the frame, and a frame attaching end (5) located opposite the free end, which frame attaching end is secured to the frame in an undetachable and at least partly immovable manner relative to the frame, and a holder (8) attached to the frame (1) for receiving a plug (9; 109) of the lock cable (2; 102) cooperating with the holder.

## Patentansprüche

1. Ein Fahrrad, das einen Rahmen (1) umfasst, wobei der Rahmen zusätzlich zu den Teilen, die durch den üblichen Begriff "Fahrradrahmen" umfasst werden, auch Teile von Rahmen von Fahrradteilen wie etwa Fahrradsattel, Fahrradlenker und dergleichen umfassen kann, **gekennzeichnet durch** einen an dem Rahmen befestigten Rahmenstift (7) zur Befestigung in einer mit dem Rahmenstift zusammenwirkenden Stiftbuchse (3; 103B) eines Schließkabels (1; 102) zum Befestigen des Schließkabesl an dem Rahmen, wobei der Rahmenstift ein relativ zu dem Rahmen vorspringendes, freies Schließkabelbefestigungsende (4) und ein dem freien Ende gegenüber befindliches Rahmenbefestigungsende (5) aufweist, wobei das Rahmenbefestigungsende in einer nicht lösbaren und zumindest teilweise relativ zum Rahmen unbeweglichen Weise festgemacht ist, und einen an dem Rahmen (1) befestigten Halter (8) zum Aufnehmen eines mit dem Halter zusammenwirkenden Zapfens (9; 109) des Schließkabels (2; 102).

## Revendications

1. Bicyclette comprenant un cadre (1), lequel cadre, en plus des parties couvertes par le terme usuel de "cadre de bicyclette", peut également comprendre des parties de cadres de parties de bicyclette telles qu'une selle de bicyclette, un guidon de bicyclette et similaire, **caractérisée par** un doigt de cadre (7) fixé au cadre, destiné à être fixé dans un manchon de doigt de cadre (3 ; 103B) d'un câble anti-vol (1 ; 102) coopèrant avec le doigt de cadre pour fixer le câble anti-vol sur le cadre, le doigt de cadre présentant une extrémité libre de fixation de câble anti-vol (4) faisant saillie par rapport au cadre, et une extrémité de fixation au cadre (5) située à l'opposé de l'extrémité libre, laquelle extrémité de fixation au cadre est assujettie au cadre de manière non détachable et au moins partiellement inamovible par rapport au cadre, et un support (8) fixé au cadre (1) afin de recevoir une fiche (9 ; 109) du câble anti-vol (2 ; 102) coopèrant avec le support.
